## Europäisches Patentamt

## European Patent Office

## Office européen des brevets

(11) Publication number: **0 123 966**
**B1**

(12) **EUROPEAN PATENT SPECIFICATION**

(45) Date of publication of patent specification: **25.11.87**

(21) Application number: **84103860.7**

(22) Date of filing: **06.04.84**

(51) Int. Cl.⁴: **B 32 B 27/32, A 41 D 31/00**

(54) Porous static electric charge dissipative laminate.

(30) Priority: **03.05.83 US 491098**

(43) Date of publication of application:
**07.11.84 Bulletin 84/45**

(45) Publication of the grant of the patent:
**25.11.87 Bulletin 87/48**

(84) Designated Contracting States:
**AT BE CH DE FR GB IT LI LU NL SE**

(56) References cited:
**GB-A- 703 153**
**GB-A-1 085 818**
**GB-A-1 405 631**
**US-A-4 258 100**
**US-A-4 433 026**

(73) Proprietor: **W.L. GORE & ASSOCIATES, INC.**
**555 Paper Mill Road P.O. Box 9329**
**Newark Delaware 19711 (US)**

(72) Inventor: **Brinton, Samuel J.**
**9253 Hickory Hill Road**
**Oxford Pennsylvania 19363 (US)**
Inventor: **Manniso, James L.**
**5 Woodsman Drive**
**Newark Delaware 19711 (US)**

(74) Representative: **Taylor, Derek George et al**
**MATHISEN, MACARA & CO. The Coach House**
**6-8 Swakeleys Road**
**Ickenham Uxbridge UB10 8BZ (GB)**

## 0 123 966

**Description**

This invention relates to a composite layered article in sheet form which is porous and has sufficient electrical conductivity to render the article capable of dissipating static electric charges on its surface.

There is a need for a sheet material suitable for use in garments for wear in clean rooms, where formation of static charges on clothing worn by workers may deleteriously affect work being conducted therein. As a particular example, garments have been needed by various industries working in clean room environments which are comfortable to wear, which are barriers to bacteria and submicron particles and which rapidly dissipate static electric charges which may form on them.

The barrier is needed to prevent bacteria or possibly toxic particles from the work environment from passing through the garment from outside to inside as well as retain any particles carried by the worker inside the barrier to avoid contamination of a work environment sensitive to them outside the barrier. The barrier should also allow rapid evaporation of body moisture through it so that the garment will be comfortable to wear. The static electric charge dissipation property is needed in that charges attract contaminating particles to a garment. Also discharge of such a static charge at a work site or the proximity of an electrostatic field could be harmful if the garment was being worn during manufacture or assembly at that site of delicate electronic, computer, or other equipment subject to damage by static electric discharge.

According to the present invention there is provided a composite article comprising a layer of porous polymeric film, a layer of textile fabric and a layer of electrically conductive adhesive between said film and fabric layers.

In a garment, the porous polymeric film will normally be an outer layer with respect to the textile fabric and for ease of reference the terms 'outer' and 'inner' will be used hereinafter in relation to these layers of the composite article.

The outer layer of the layered composite preferably comprises a smooth layer which does not generate particles under normal friction and will transmit water vapour at the rate of at least 1000 g/m²/day and preferably at a rate exceeding 2000 g/m²/day and is preferably, though not necessarily, formed from a porous hydrophobic polymer having an advancing water contact angle exceeding 90 degrees.

The inner layer of the layered composite comprises a non-conductive textile of commerce which is adhesively bonded to the outer layer by an electrically conductive adhesive. The textile may be a woven, bonded or knit fabric, should be wash durable, and should have an open weave which will not prevent free transmission of water vapour through it and thence through the moisture transmitting outer layer bonded to it.

The electrically conductive adhesive used to bond the outer and inner layers is made by mixing sufficient conductive carbon black or other conductive particles into a commercial isocyanate-cured polyester adhesive to provide the requisite conductivity to render the composite antistatic to the desired degree.

In a preferred embodiment of the invention, the outer layer of the layered composite comprises a polymeric membrane which as a smooth surface and its sufficiently porous to transmit water vapour readily, but does not have pores large enough to allow passage through it of submicron size particles and bacteria. Polymeric films or membranes of the requisite porosity made from polyvinyl chloride, polyurethane, poly acrylate esters, and poly fluoroethylenes are known in the art. The preferred polymeric materials for use as the outer layer of the composite are porous membranes comprising expanded polytetrafluoroethylene which are disclosed in U.S. Patents 3,953,566, 4,187,390 and 3,962,153. These membranes are hydrophobic, porous, and have a water vapour transmission rate through the membrane exceeding 1000 g/m²/day and preferably exceeding 2000 g/m²/day, a rate which is desirable for a layered composite useful for application as a clean room garment which should be comfortable to wear when worn for long periods of time, such as a work shift in a clean room environment.

The preferred membranes have a smooth surface such that particles tend not to cling to the surface, the surface does not form particles of lint under conditions of friction normal to use of the composite embodying the membrane in a garment, and have been found to block the passage of bacteria and submicron size particles. Thus, bacteria or fine particles will not pass outside the garment from the wearer to the clean room environment or pass from the clean room environment through the garment to the wearer. These properties make such garments useful in biological hazard clean rooms and for use in sterile environments such as hospital operating rooms and pharmaceutical production areas as well as in rooms where static electricity discharge sensitive or electrostatic field sensitive apparatus and parts are being manufactured or assembled.

In cases where abrasion resistance is more valuable than the non-linting surface property, an additional textile layer may be bonded to the polymeric membrane. Preferred textile fabrics are abrasion resistant and relatively non-linting fabrics, such as woven or knit fabrics of monofilament polyester.

Almost any woven, bonded, or knit natural or synthetic organic fibre or fibre blend textile fabric can be used as the inner textile layer of the composite provided that it is of sufficiently open weave not to interfere with the transmission of water vapour through it.

Commercial woven and bonded fabrics and knits made from cotton, polyester, polyamide, acrylics, acrylonitrile copolymers, and their blends and other fibres having a water vapour permeability of 1000 to 2000 or more g/m²/day are available commercially and can be used as the inner textile layer of the

2

composite of the invention. Preferred fabrics are open weave knits and texturized polyester and polyester-cotton blends.

The porous polymeric film layer and the textile layer are united into a layered composite by printing on the surfaces to be united a pattern of spaced continuous lines of conductive adhesive by means of simple gravure rolls or other commonly used method of printing adhesive, then uniting the layers under sufficient heat and pressure by means of, for instance, nip rolls to assure a permanent bond of the two layers. The adhesive lines or lines in the pattern are spaced wide enough apart to prevent formation of a continuous adhesive layer between the two plies and a relatively large percentage of the surfaces of the two plies are adhesive-free and hence readily moisture permeable. It is necessary that the lines in the adhesive pattern be continuous so that uninterrupted electrically conductive pathways exist throughout the space between the two bonded layers.

A commercial solvent based urethane adhesive is used to bond the two layers of the composite. It has been found that an isocyanate-cured polyester adhesive in a 30% solids mixture with methylene chloride and toluene is the preferred adhesive. The adhesive is made electrically conductive by mixing into it about 5 to 25% fine particles of conductive carbon or metal to give a printing paste of suitable viscosity for printing. It is preferred that the conductive particles be as small as possible so that an adequately conductive adhesive can be obtained by use of less of the particles to form the conductive pathway. The preferred fine conductive particles are a furnace carbon black of effective surface area of at least about 850 $m^2/g$ as measured by the nitrogen surface area BET method.

An alternative method of laminating the outer and inner layers of the composite together may be used. The polymeric layer may be, for instance, gravure printed with spaced lines or a cross-hatched pattern of conductive adhesive or ink and allowed to dry. At a later time for convenience in the manufacturing operation, a non-conductive pattern of adhesive dots is printed on either the previous conductively printed outer layer or the inner textile layer and the two layers adhesively bonded under heat and pressure by passing the two layers together through nip rolls followed by heat to yield a permanently bonded composite.

The assembled layered composite is wash durable, soft, pliable, and suitable for use in garments for continuous comfortable wear in clean rooms as described above.

The following examples illustrate an embodiment of the invention.

Example I

15 grams of furnace carbon black of effective surface area of at least 1000 $m^2/g$ was mixed into 95 g of methyl ethyl ketone to produce a thick paste. This was stirred into 200 grams of a commercial isocyanate-cured polyester adhesive in a 30% solids mixture with methylene chloride and toluene to give a conductive adhesive containing 20% conductive carbon. This adhesive was applied to 2 ft. (61 cms) square swatches of porous expanded polytetrafluoroethylene, as described in U.S. Patents, 3,953,566 and 4,194,041, in a spaced crosshatched pattern of continuous lines by helical gravure rolls and the swatches air dried. The swatches were later printed with a spaced dot pattern of the same adhesive used to prepare the conductive adhesive and bonded together by nip roll then heat to woven polyester fabric. Samples of the composite were washed for 48 hours and found to be wash-durable.

Static electric charge decay times of two samples were measured by the U.S. Federal Test Method Standard 101B Method 4046. The NFPA Code 56A requires a decay time for a static electric charge of 5000 volts to 50 volts of not more than 1/2 second for a material to be rated as static electric charge dissipative.

TABLE 1
Static decay time in seconds

| Charge applied | Unwashed sample | Sample washed 48 hours |
|---|---|---|
| +5000 volts | <0.1 | <0.1 |
| −5000 volts | <0.1 | <0.1 |

The samples are adjudged to be both wash-durable and static electric charge dissipative.

Although reference has been made to inner, outer and intermediate layers of the composite, this is not intended to preclude the provision of other layers attached to the inside or outside of the composite.

**Claims**

1. A composite article comprising a layer of porous polymeric film and a layer of textile fabric characterised by a layer of electrically conductive adhesive between said film and fabric layers.

2. A composite article according to claim 1, characterised in that the porous polymeric film layer comprises expanded polytetrafluoroethylene.

**0 123 966**

3. A composite article according to claim 1 or claim 2 characterised in that the electrical conductive adhesive layer is in the form of a spaced pattern of continuous lines.

4. A composite article according to any preceidng claim characterised in that the adhesive contains particles of a conductive metal.

5. A composite article according to any preceding claim characterised in that the adhesive contains conductive carbon particles.

6. A composite article according to any preceding claim characterised in that an additional textile fabric layer is adhesively bonded to the porous polymeric film.

7. A composite article according to any preceding claim characterised in that the adhesive consists essentially of an organic solvent based isocyanate-cured polyester adhesive.

8. A composite article according to claim 5 characterised in that the carbon particles are a furnace carbon black of effective surface area as measured by nitrogen surface absorption methods of at least about 850 m²/g.

9. An article of clothing manufactured from the composite article claimed in any preceding claim.

**Patentansprüche**

1. Verbundkörper der eine Lage eines porösen Polymerisatfilmes und eine Lage eines Textilmaterials aufweist, dadurch gekennzeichnet, daß zwischen den genannten Film- und Textilmateriallagen eine Schicht eines elektrisch leitfähigen Klebstoffes vorgesehen ist.

2. Verbundkörper nach Anspruch 1, dadurch gekennzeichnet, daß die aus einem porösen Polymerisatfilm bestehende Lage expandiertes Polytetrafluoräthylen enthält.

3. Verbundkörper nach Anspruch 1 oder 2, dadurch gekennzeichnet, daß die elektrisch leitfähige Klebstoffschicht in Form eines Musters aus im Abstand voneinander angeordneten durchgehenden Linien ausgebildet ist.

4. Verbundkörper nach einem der vorhergehenden Ansprüche, dadurch gekennzeichnet, daß der Klebstoff Partikel aus einem leitfähigen Metall enthält.

5. Verbundkörper nach einem der vorhergehenden Ansprüche, dadurch gekennzeichnet, daß der Klebstoff Partikel aus leitfähigem Kohlenstoff enthält.

6. Verbundkörper nach einem der vorhergehenden Ansprüche, dadurch gekennzeichnet, daß eine zusätzliche Lage aus Textilmaterial mit dem porösen Polymerisatfilm durch Kleben verbunden ist.

7. Verbundkörper nach einem der vorhergehenden Ansprüche, dadurch gekennzeichnet, daß der Klebstoff im wesentlichen aus einem auf Basis eines organischen Lösungsmittels aufgebauten, Isocyanatgehärteten Polyesterklebstoff besteht.

8. Verbundkörper nach Anspruch 5, dadurch gekennzeichnet, daß die Kohlenstoffpartikel aus Ofenruß mit einer wirksamen Oberfläche von mindestens 850 m²/g, gemessen mit Stickstoff-Absorptions-Methoden, bestehen.

9. Kleidungsstück welches aus einem Verbundkörper nach einem der vorhergehenden Ansprüche hergestellt ist.

**Revendications**

1. Article composite comprenant une couche de pellicule polymère poreuse et une couche de tissu, caractérisé par une couche d'adhésif électriquement conducteur entre les couches de pellicule et de tissu précitées.

2. Article composite suivant la revendication 1, caractérisé en ce que la couche de pellicule polymère poreuse comprend du polytétrafluoréthylène expansé.

3. Article composite suivant l'une ou l'autre des revendications 1 et 2, caractérisé en ce que la couche adhésive électriquement conductrice est sous la forme d'un dessin formé de lignes continues espacées.

4. Article composite suivant l'une quelconque des revendications précédentes, caractérisé en ce que l'adhésif contient des particules d'un métal conducteur.

5. Article composite suivant l'une quelconque des revendications précédentes, caractérisé en ce que l'adhésif contient des particules de carbone conductrices.

6. Article comprise suivant l'une quelconque des revendications précédentes, caractérisé en ce qu'une couche de tissu additionnelle est liée de façon adhésive à la pellicule polymère poreuse.

7. Article composite suivant l'une quelconque des revendications précédentes, caractérisé en ce que l'adhésif est formé essentiellement d'un adhésif de polyester durci par de l'isocyanate à base de solvant organique.

8. Article composite suivant la revendication 5, caractérisé en ce que les particules de carbone sont formées d'un noir de carbone du type four, d'aire superficielle efficace, telle que mesurée par des méthodes d'absorption superficielle d'azote d'au moins environ 850 m²/g.

9. Article vestimentaire fabriqué à partir de l'article composite suivant l'une quelconque des revendications précédentes.